# EUROPÄISCHE PATENTSCHRIFT

(11) **EP 2 551 663 B1**
(45) Veröffentlichungstag und Bekanntmachung des Hinweises auf die Patenterteilung: **26.06.2019**
(21) Anmeldenummer: 12153282.4
(22) Anmeldetag: 31.01.2012
(51) Int. Cl.: G01N 21/47, G01N 21/55, G01N 21/88, G01N 21/17

(54) **Vorrichtung und Verfahren zur Untersuchung von Beschichtungen mit Effektpigmenten**
Method and device for inspecting coatings with effect pigments
Dispositif et procédé d'examen de revêtements à l'aide de pigments à effet

(30) Priorität: 27.07.2011 DE 102011108599
(43) Veröffentlichungstag der Anmeldung: 30.01.2013
(73) Patentinhaber: BYK-Gardner GmbH, 82538 Geretsried (DE)
(72) Erfinder: Sperling, Uwe, 82538 Geretsried (DE); Schwarz, Peter, 82549 Königsdorf (DE)
(74) Vertreter: Bittner, Bernhard

(56) Entgegenhaltungen:
- EP-A1- 0 773 426
- DE-A1- 10 122 917
- DE-A1-102004 034 160
- JP-A- 2000 205 846
- US-A1- 2004 252 308

## Beschreibung

### Beschreibung

Die vorliegende Erfindung bezieht sich auf eine Vorrichtung und ein Verfahren zum Untersuchen von Oberflächen mit Effektbeschichtungen, welche sogenannte Effektpigmente aufweisen. Derartige Effektpigmente bewirken, dass die betreffende Schicht unter bestimmten Bedingungen, beispielsweise mit einem unter einem bestimmten Winkel einfallenden Licht glänzt bzw. glitzert oder eine bestimmte Farbe annimmt.

Dabei sind aus dem Stand der Technik die unterschiedlichsten Effektpigmente bekannt und auch unterschiedlichste optische Eigenschaften derselben. So können beispielsweise diese Effektpigmente unterschiedlichste Farbumschläge aufweisen.

Aus der DE 10 2007 014 475 A1 ist eine Vorrichtung und ein Verfahren zur Bestimmung von Oberflächeneigenschaften bekannt. Dabei wird ein Ergebniswert ermittelt, der charakteristisch für die Werte der physikalischen Eigenschaft aller Flächenanteile eines Bildes ist, die durch die Analyse dieses Bildes bestimmt wurden. Neben dem Ergebniswert wird ein weiterer für die Oberfläche charakteristischer Wert ermittelt und dieser charakteristische Wert wird gemeinsam mit dem Ergebniswert dargestellt.

Die DE 10 2007 014 474 A1 beschreibt ein Verfahren und eine Vorrichtung zur quantitativen Bestimmung von Oberflächeneigenschaften. Auch bei diesem Verfahren wird ein Ergebniswert ermittelt und dieser Ergebniswert wird gegenüber der Größe der bestimmten Flächenanteile dargestellt.

Die DE 10 2006 048 688 A1 bezieht sich auf ein Verfahren und eine Vorrichtung zur Untersuchung von Oberflächen mit Effektpigmenten. Dabei wird ebenfalls eine zu untersuchende Oberfläche unter unterschiedlichen Einstrahl- bzw. Aufnahmewinkeln untersucht und anhand dieser unterschiedlichen Winkel auf eine Krümmung der Effektpigmente geschlossen.

Aus der DE 2006 045 285 A1 ist eine Vorrichtung zur Untersuchung von Oberflächeneigenschaften mit einer indirekten Beleuchtung bekannt. Dabei ist eine Strahlungsstreueinrichtung vorgesehen, welche wenigstens teilweise von der ersten Beleuchtungseinrichtung beleuchtet wird und welche Streustrahlung auf die zu untersuchende Oberfläche sendet.

Die DE 10 2004 034 160 A1 offenbart eine Vorrichtung zur Untersuchung von Oberflächenlackierungen, welche Pigmente aufweisen. Dazu wird eine Strahlungseinrichtung vorgeschlagen, die mehrere Leuchtdioden mit unterschiedlichen Emissionsspektren umfasst, sowie eine Schwarz-Weiß-Kamera, die in Verbindung mit einer Vielzahl von Strahlungsquellen mit unterschiedlichen Emissionsspektren Informationen über die Farbe der Pigmente liefert.

Aus dem Stand der Technik sind Messgeräte oder Vorrichtungen bekannt, die auch zur farblichen, bzw. optischen Erfassung derartiger Beschichtungen dienen. Diese Vorrichtungen weisen dabei üblicherweise mehrere Lichtquellen auf, welche bestimmtes Licht, beispielsweise normiertes Weißlicht unter unterschiedlichen Winkeln auf die jeweilige mit der Beschichtung versehene Oberfläche richten. Die von dieser Oberfläche zurückgeworfene Strahlung wird von einer Kamera, wie beispielsweise einer CCD-Farbkamera aufgenommen und die Bilder entsprechend ausgewertet.

Dabei sind jedoch den Genauigkeiten derartiger Messungen systembedingt Grenzen gesetzt. Derartige Farbbildkameras weisen üblicherweise ein Array mit einer Vielzahl von Fotodetektoren auf, wobei zusätzlich noch diejenigen Detektoren, die zur Erfassung von roten Lichtkomponenten, die Detektoren, die zur Erfassung von grünen Lichtkomponenten und die Detektoren, die jeweils zur Erfassung von blauen Lichtkomponenten dienen, in jedenfalls noch gering unterschiedlichen Positionen angeordnet sind.

Falls nun derartige Beschichtungen mit Effektpigmenten von einem entsprechenden Gerät aufgenommen werden, ist es möglich, dass, wenn ein Effektpigment, beispielsweise Licht im rötlichen Farbbereich reflektiert, dieses Licht bei bestimmten Messungen auf diejenigen Fotozellen reflektiert wird, die zur Aufnahme von blauem oder grünem Licht gedacht sind. In diesem Falle werden die entsprechenden Fotozellen relativ geringe Werte oder Intensitäten anzeigen und auf diese Weise wird das Ergebnis verfälscht.

Ferner können bei der Beleuchtung mit mehreren Strahlungsquellen unterschiedlicher spektraler Zusammensetzung die einzelnen Beleuchtungsquelle individuell mit Strom versorgt werden. Dadurch kann man die Helligkeit dieser Beleuchtung optimal z.B. der Probe oder der Sensorcharakteristik anpassen und erreicht damit für jede Beleuchtung eine maximale Messdynamik.

Der vorliegenden Erfindung liegt daher die Aufgabe zugrunde, eine Vorrichtung und ein Verfahren zur Verfügung zu stellen, welches genauere bzw. weniger verfälschte Aufnahmen, insbesondere von Beschichtungen mit Effektpigmenten, ermöglicht. Diese Aufgabe wird durch die Gegenstände der unabhängigen Ansprüche erreicht. Vorteilhafte Ausführungsformen und Weiterbildungen sind Gegenstand der Unteransprüche.

Bei einem erfindungsgemäßen Verfahren zum Untersuchen von optischen Oberflächeneigenschaften von Oberflächen gemäß Anspruch 1 wird mit einer Strahlungseinrichtung unter einem vorgegebenen Einstrahlwinkel gegenüber der Oberfläche Strahlung auf die zu untersuchende Oberfläche eingestrahlt und die von dieser Oberfläche gestreute und/oder reflektierte Strahlung bzw. die allgemein von dieser Oberfläche weitergegebene Strahlung gelangt (zumindest teilweise) auf eine unter einem vorgegebenen Erfassungswinkel gegenüber der Oberfläche angeordnete Strahlungsdetektoreinrichtung mit einer schwarz/weiß-Bilder aufnehmenden Bildaufnahmeeinheit. Dabei erlaubt diese Strahlungsdetektoreinrichtung eine ortsaufgelöste Erfassung, der auf sie auftreffenden Strahlung.

Erfindungsgemäß richtet die Strahlungseinrichtung Strahlung mit einem ersten Wellenlängenbereich auf die Oberfläche und die Bildaufnahmeeinheit nimmt ein erstes ortsaufgelöstes Bild dieser von der Oberfläche gestreuten und/oder reflektierten, das heißt allgemein weitergegebenen Strahlen auf. Weiterhin richtet die Strahlungseinrichtung Strahlung mit einem zweiten Wellenlängenbereich auf die Oberfläche und die Bildaufnahmeeinheit nimmt ein zweites ortaufgelöstes Bild dieser von der Oberfläche gestreuten und/oder reflektierten Strahlung auf. Dabei unterscheiden sich die Strahlung mit dem ersten Wellenlängenbereich und die Strahlung mit dem zweiten Wellenlängenbereich wenigstens teilweise voneinander und diese Strahlungen gelangen zumindest teilweise zeitlich versetzt auf die Oberfläche. Dabei wird jedoch die Strahlung mit dem ersten Wellenlängenbereich sowie die Strahlung mit dem zweiten Wellenlängenbereich unter dem gleichen Einstrahlwinkel auf die Oberfläche eingestrahlt. Unter dem ortsaufgelösten Bild wird dabei nicht nur das eigentliche Bild verstanden, sondern auch eine Vielzahl von Daten (beispielsweise Intensitätswerten), aus denen sich dieses Bild zusammensetzt bzw. ableiten lässt.

Es wird daher erfindungsgemäß vorgeschlagen, dass zur Aufnahme der Bilder zwar eine schwarz/weiß- oder eine Graustufenkamera (oder allgemein eine Kamera mit nur einer bestimmten Art von Pixeln) verwendet wird, welche eine höhere räumliche Auflösung , eine bessere Linearität, eine bessere Bauteil Reproduzierbarkeit , eine größere Messdynamik bei einem vergleichsweise niedrigen Bauteilpreis bietet. Um gleichwohl einen optischen Eindruck auch von der Farbe zu erreichen, wird vorgeschlagen, dass die Strahlungseinrichtung Licht mit unterschiedlicher Farbe auf die Oberfläche richtet und daher mehrere Bilder mit unterschiedlichen Farbkomponenten aufgenommen werden. Aus diesen jeweils aufgenommenen Bildern kann wiederum auch auf die farblichen Einflüsse der jeweiligen Oberfläche bzw. auch der Effektpigmente geschlossen werden.

Erfindungsgemäß handelt es sich bei der von der Oberfläche gestreuten und/oder reflektierten Strahlung allgemein um diejenige Strahlung, welche als Folge der von der Strahlungseinrichtung eingestrahlten Strahlung weitergeleitet wird, insbesondere auf die Bildaufnahmeeinrichtung weitergeleitet wird.

Dabei ist es möglich, in dem Gesamtbild durch eine Schwellwertbildung die einzelnen Effektpigmente isoliert darzustellen und die charakteristischen optischen Eigenschaften dieser Effektpigmente wie z.B. Farbe, Reflexionsverhalten, räumliche Streucharakteristik zu bestimmen. Auch ist eine derartige isolierte Darstellung der Effektpigmente durch Schwellwertbildung in einem Histogramm möglich.

Diese Schwellwertbestimmung kann sowohl örtlich als auch in einem Helligkeitshistogramm zur Anwendung kommen. Der Schwellwert kann dabei als ein fester oder als ein dynamischer Wert verwendet werden, der zum Beispiel in Abhängigkeit der Gesamthelligkeit des Bildes oder eines Bild Kontrastwertes ermittelt werden kann.

Bei einem erfindungsgemäßen Verfahren erfolgt die mathematische Schwellenwertbildung dynamisch und die Schwellwertbildung wird von Bildinformationen wie Bildhelligkeit, Bildkontrast abgeleitet.

Durch das Verrechnen der Flake Charakteristika der unterschiedlichen Bilder mit den Unterschiedlichen spektralen Beleuchtungen, können dadurch die optischen Eigenschaften der Effektpigmente unter dem jeweiligen Beleuchtungswinkel bestimmt werden. Was für die optische Charakterisierung der Effektflakes im Besonderen gilt ist auch für die Gesamtoberfläche anwendbar.

Bei einem vorteilhaften Verfahren erfolgen die Bestrahlung der Oberfläche mit Strahlung mit dem ersten Wellenlängenbereich und die Bestrahlung mit Strahlung mit dem zweiten Wellenlängenbereich vollständig zeitlich voneinander versetzt.

Bei einem weiteren vorteilhaften Verfahren sind auch die Wellenlängen der beiden Strahlungen, die auf die Oberfläche gerichtet werden, vollständig voneinander getrennt. Beispielsweise wird bei einem ersten Auftreffen grünes Licht verwendet und bei einem zweiten Auftreffen rotes Licht.

Es wird daher bewusst das Bild mit einer schwarz/weiß-Kamera aufgenommen, da diese eine höhere Auflösung aufweist und keine Fehler durch unterschiedliche RGB-Detektoreinheiten der Kamera auftreten. Es wäre auch möglich, eine Farbkamera zu verwenden und die Werte der jeweiligen Sensorkomponenten zusammenzufassen.

Erfindungsgemäß handelt es sich bei der Bildaufnahmeeinheit um eine Bildaufnahmeeinheit, welche eine Vielzahl von identischen Fotoelementen aufweist, das heißt insbesondere nur einen bestimmten Typ von Fotoelementen aufweist und daher nur zur Aufnahme von Schwarz/weiß- oder Graustufenbildern geeignet ist.

Vorzugsweise wird bei jeder Bildaufnahme pixelweise der individuelle Dunkelwert oder die Empfindlichkeit oder die Linearität, welche z.B. durch eine Vorab - Kalibrierung ermittelt wurden rechnerisch berücksichtigt. Damit werden Bauteiletoleranzen die auch zwischen einzelnen Pixeln auftreten können oder sonstige Artefakte kompensiert. Anders als bei der Verwendung einer Farbbildkamera müssen hier nicht die Unterschiede zwischen den einzelnen Farbpixeln berücksichtigt werden, bzw. Informationen nicht nach Farbpixeln separiert werden.

Bei einem erfindungsgemäßen Verfahren werden das erste von der Bildaufnahmeeinheit aufgenommene Bild und das zweite von der Bildaufnahmeeinheit aufgenommene Bild miteinander verglichen und oder miteinander verrechnet. Genauer gesagt werden vorteilhaft die für die jeweiligen Bilder charakteristischen (Intensitäts-)werte miteinander verglichen. Auf diese Weise können insbesondere die Farbanteile des auf die Bildaufnahmeeinheit auftreffenden Lichts ausgewertet werden. Vorteilhaft findet dabei dieser Vergleich ebenfalls ortsaufgelöst bzw. pixelweise statt. Damit ist es möglich, dass die einzelnen Signale der einzelnen Pixelelemente der Bildaufnahmeeinheit jeweils miteinander verglichen werden. Fasst man dabei mehrere Pixelelemente zusammen, die der Abbildung eines Effektpigmentes entsprechen, so erhält man dadurch die (bevorzugt gemittelten) pigmentspezifischen Eigenschaften. Bei einer Verrechnung der Bilder bzw. der charakteristischen Intensitätswerte können diese Werte beispielsweise miteinander multipliziert oder gemeinsam anderen mathematischen Operationen wie Mittelwertbildungen Summationen und dergleichen unterworfen werden.

Dabei ist es bevorzugt möglich, dass - insbesondere zum Zwecke dieses Vergleichs - Bilder oder Ausschnitte dieser Bilder mathematisch zur Deckung gebracht werden. Es kann dabei sowohl ein (insbesondere pixelweiser) Vergleich der gesamten Bilder stattfinden oder aber der Vergleich bezieht sich erfindungsgemäß auf einzelne Pixelbezirke des Bildes. In diesem Fall werden bevorzugt solche Pixelbezirke bzw. Pixelbereiche für den Vergleich ausgewählt, welche weitgehend der Abbildung der Effektpigmente entsprechen. Zur Ermittlung dieser Bezirke kann die oben beschriebene Schwellwertbildung zur Anwendung kommen Aus diesem Vergleich kann auf die farblichen Eigenschaften der Oberfläche bzw. der einzelnen Effektpigmente (Sparkles) geschlossen werden.

Denkbar wäre auch eine Kameratechnologie, die derartig konstruiert ist, dass jedes Pixel nicht nur die Helligkeit sondern auch eine spektrale Information des auf es auftreffenden Lichts aufzeichnet. Bei derartigen Kameras werden gleichwohl, anders als bei Farbbildkameras, einheitliche Pixel verwendet.

Bei einem erfindungsgemäßen Verfahren ist die Oberfläche eine mit einer Lackschicht versehene Oberfläche. Damit kann es sich beispielsweise und bevorzugt um die Oberflächen von Fahrzeugkarosserien handeln, es wäre jedoch auch möglich, dass es sich bei den Oberflächen um Oberflächen von Möbelstücken, beispielsweise von Tischen oder dergleichen, handelt.

Bei einem erfindungsgemäßen Verfahren weist die Lackschicht Effektpigmente auf. Bei diesen Effektpigmenten kann es sich, wie oben erwähnt, beispielsweise um kleine Metallteilchen handeln, welche in der Schicht vorhanden sind. Vorteilhaft weisen dabei diese Effektpigmente ein Flopverhalten auf, das heißt beispielsweise einen bestimmten Farbumschlag oder auch Intensitätsumschlag, je nachdem unter welchem Winkel das Licht auf die Pigmente auftrifft.

Bei einem weiteren vorteilhaften Verfahren ist die Strahlungseinrichtung derart gestaltet, dass die Strahlungen unter den beiden unterschiedlichen Wellenlängen unter genau dem gleichen Winkel auf die Oberfläche einstrahlen. Damit werden vorteilhaft die Strahlungen mit dem ersten Wellenlängenbereich und die Strahlungen mit dem zweiten Wellenlängenbereich kollinear zueinander auf die Oberfläche eingestrahlt.

Bei einem weiteren vorteilhaften Verfahren wird unter dem ersten Einstrahlwinkel zusätzlich noch Strahlung mit einem dritten Wellenlängenbereich, der sich vom ersten Wellenlängenbereich und auch vom zweiten Wellenlängenbereich unterscheidet, auf die Oberfläche eingestrahlt und die Bildaufnahmeeinheit nimmt die von der Oberfläche reflektierte und/oder gestreute Strahlung auf, und nimmt auf diese Weise weiterhin ein drittes ortsaufgelöstes Bild auf.

Vorteilhaft erfolgt auf die Aufnahme dieses dritten Bildes zeitlich versetzt zu den beiden anderen Bildern. So ist es beispielsweise möglich, dass Licht unter drei unterschiedlichen Farben, beispielsweise rot, grün und blau auf die Oberfläche eingestrahlt wird. Aus dem Vergleich der Bilder können auf diese Weise auch die Farben der einzelnen Pigmente ermittelt werden, bzw. die Farben, unter denen die Pigmente Licht zurückreflektieren. Falls beispielsweise ein bestimmtes Pixel der Bildaufnahmeeinheit an einer bestimmten Stelle einen hohen Intensitätswert im roten Bereich zeigt, kann man hieraus schließen, dass das entsprechende Sparkle bzw. Effektpigment das Licht insbesondere mit roten Wellenlängenbereich zurückreflektiert.

So kann näherungsweise zum Beispiel der Farbwert der im Lack enthaltenen Effektpigmente in der Maßeinhalt für Farbe, z.B. dem CIELab System dargestellt werden.

Auch hier werden die beiden Bilder mit Strahlung unter dem gleichen Einfallswinkel aufgenommen.

Vorteilhaft handelt es sich bei der Strahlung um Licht und besonders bevorzugt um Licht im sichtbaren Wellenlängenbereich.

Die vorliegende Erfindung ist weiterhin auf eine Vorrichtung zum Untersuchen von optischen Oberflächeneigenschaften gemäß Anspruch 4 gerichtet. Diese Vorrichtung weist eine erste Strahlungseinrichtung auf, welche Strahlung unter einem vorgegebenen Einstrahlwinkel auf eine zu untersuchende Oberfläche richtet. Weiterhin weist die Vorrichtung eine Strahlungsdetektoreinrichtung auf, welche die auf die Oberfläche von der ersten Strahlungseinrichtung eingestrahlte und von der Oberfläche unter einen Erfassungswinkel zurückgeworfene bzw. weitergegebene Strahlung aufnimmt. Dabei weist die Strahlungsdetektoreinrichtung eine ortsaufgelöste schwarz/weiß-Bilder aufnehmende Bildaufnahmeeinheit auf.

Erfindungsgemäß ist die Strahlungseinrichtung derart ausgestaltet, dass sie zur wenigstens teilweise zeitlich versetzten Ausgabe von Strahlung in wenigstens zwei unterschiedlichen Wellenlängenbereichen unter dem gleichen Einstrahlwinkel geeignet ist und die Bildaufnahmeeinheit bis zur Aufnahme von einem ersten Bild, welches zu der Strahlung mit dem ersten Wellenlängenbereich korrespondiert, welches zu der Strahlung mit dem ersten Wellenlängenbereich korrespondiert und zur Aufnahme von einem zweiten Bild geeignet ist.

Damit wird auch hier vorgeschlagen, dass die Bildaufnahmeeinheit Bilder von Strahlungen mit zwei unterschiedlichen Wellenlängen aufnimmt und diese unterschiedlichen Wellenlängen jeweils unter dem gleichen Einstrahlwinkel auf die Oberfläche eingestrahlt werden. Unter der korrespondierenden Strahlung wird dabei diejenige Strahlung verstanden, welche von der entsprechenden Strahlungseinrichtung mit dem besagten ersten bzw. zweiten Wellenlängenbereich auf die Oberfläche eingestrahlt wurde.

Vorteilhaft ist die Strahlungseinrichtung auch zur Ausgabe von Strahlungen mit einem dritten Wellenlängenbereich geeignet und vorteilhaft die Bildaufnahmeeinheit auch zur Aufnahme eines dritten ortsaufgeösten Bildes (somit dem besagten Wellenlängenbereich).

Die Vorrichtung weist eine Vergleichseinrichtung auf, welche wenigstens das erste Bild mit dem zweiten Bild vergleicht. Mit diesem Vergleich kann dabei insbesondere auch auf farbliche Charakteristika der Oberfläche bzw. der Effektpigmente geschlossen werden.

Vorteilhaft weist die Vorrichtung eine Vielzahl von Strahlungseinrichtungen auf, welche die Oberfläche unter unterschiedlichen Winkeln beleuchten. Dabei sind vorteilhaft mehrere Strahlungseinrichtungen und besonders bevorzugt alle der Strahlungseinrichtungen zur Abgabe von Licht in unterschiedlichen Wellenlängenbereichen geeignet. Damit strahlen diese Strahlungseinrichtungen das Licht unter unterschiedlichen Winkeln auf die Oberfläche ein.

Erfindungsgemäß weist die Strahlungseinrichtung eine erste Lichtquelle auf, welche Strahlung in dem ersten Wellenlängenbereich abgibt sowie eine zweite Lichtwelle, welche Strahlung in dem zweiten Wellenlängenbereich abgibt sowie eine Strahlungsleitanordnung, welche bewirkt, dass die Strahlung in dem ersten Wellenlängenbereich und die Strahlung in dem zweiten Wellenlängenbereich unter dem gleichen Einstrahlwinkel auf die Oberfläche eingestrahlt werden. Dabei handelt es sich bei der ersten Lichtquelle und auch bei der zweiten Lichtwelle jeweils um Leuchtdioden Diese Leuchtdioden können dabei Licht in unterschiedlichen Wellenlängenbereichen auf die Oberfläche richten.

Die Strahlungsleitanordnung bewirkt, dass die Strahlung der ersten Lichtquelle und der zweiten Lichtquelle im Wesentlichen kollinear auf die Oberfläche auftreffen. Anstelle der Strahlungsleitanordnung wäre es auch möglich, dass nur eine Lichtquelle vorgesehen ist und dafür mehrere Filterelemente, welche vor diese Lichtquelle geschoben werden können. Auch auf diese Weise wäre es möglich, Licht mit unterschiedlichen Wellenlängen kollinear auf die

Oberfläche zu werfen, wobei in diesem Falle jedoch die Intensität der auf die Oberfläche treffenden Strahlung jeweils durch die Filterelemente abgeschwächt wird.

Bei einer weiteren vorteilhaften Ausführungsform weist die Strahlungsleitanordnung wenigstens ein Spiegelelement auf. Mit diesem Spiegelelement kann es sich beispielsweise um einen dichroitischen Spiegel handeln, der Licht einer bestimmten Wellenlänge passieren lässt und Licht einer weiteren Wellenlänge mehr oder weniger vollständig reflektiert (oder absorbiert). Neben oder zusätzlich zu den Spiegelelementen können jedoch auch andere Elemente, beispielsweise Streuscheiben, Linsen und dergleichen Anwendung finden.

Bei einer weiteren vorteilhaften Ausführungsform weist die Vorrichtung wenigstens eine Prozessoreinrichtung auf, welche aus einem Vergleich der aufgenommenen Bilder eine Information ermittelt, welche für eine Farbe wenigstens eines Abschnitts der Oberfläche charakteristisch ist. Bevorzugt wird eine Eigenschaft ermittelt, die für die Sparkles oder ein optisches Verhalten wenigstens eines Effektpigments und bevorzug einer Vielzahl von Effektpigmenten charakteristisch ist. Vorteilhaft wertet damit die Prozessoreinrichtung die jeweiligen Bilder ortsaufgelöst auf und führt daher auch einen Vergleich jeweils ortsaufgelöst bzw. einzeln für die jeweiligen Pixel der Bildaufnahmeeinheit durch.

Weitere vorteilhafte Ausführungsformen und vergleichende Beispiele ergeben sich aus den beigefügten Zeichnungen:
Darin zeigen:
- Fig. 1a -1c: drei Darstellungen zur Veranschaulichung von Effektpigmenten;
- Fig. 2: eine Darstellung einer Bildaufnahmeeinheit für eine Farbbildkamera;
- Fig. 3: eine schematische Darstellung einer erfindungsgemäßen Vorrichtung;
- Fig. 4: eine schematische Darstellung einer Vorrichtung gemäß eines vergleichenden Beispiels;
- Fig. 5: eine Darstellung einer ersten Ausführungsform einer Strahlungseinrichtung;
- Fig. 6: eine weitere Ausführungsform einer erfindungsgemäßen Strahlungseinrichtung;
- Fig. 7a,b: eine weitere Ausführungsform einer erfindungsgemäßen Strahlungseinrichtung; und
- Fig. 8: eine weitere Ausführungsform einer erfindungsgemäßen Strahlungseinrichtung.

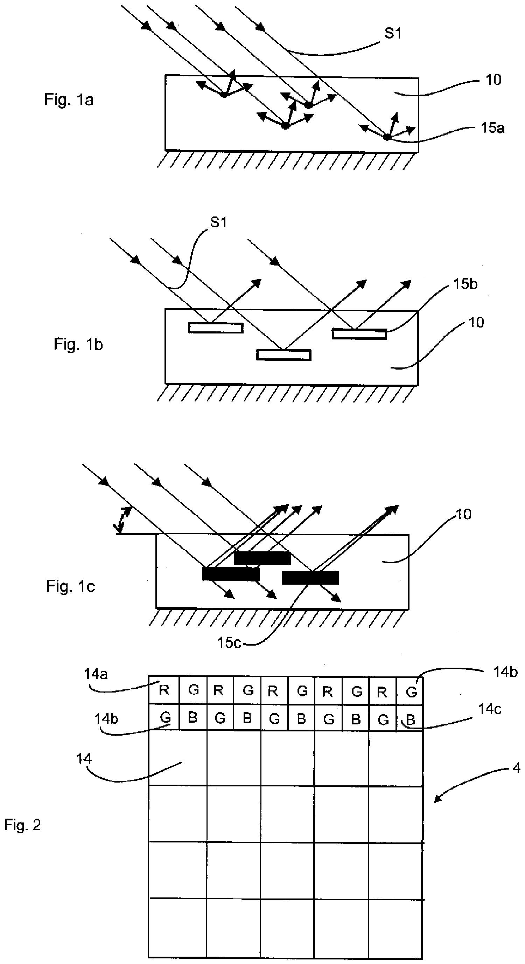

Die Figuren 1a-1c zeigen drei Beispiele von Pigmenten. Bei der in Figur 1a gezeigten Ausgestaltung weist die Oberfläche bzw. die Beschichtung absorbierende Pigmente 15a auf. Diese absorbierenden Pigmente 15a weisen eine spezifische Farbe auf und die Lackfarbe entsteht hier durch selektive Absorption und Streuung des Lichtes in alle Richtungen.

Bei der in Fig. 1b gezeigten Darstellung sind in der Oberfläche bzw. in der Beschichtung 10 Metalleffektpigmente 15b angeordnet. Diese Effektpigmente erzeugen einen metallischen Glanz durch spiegelnde Reflektion des Lichtes.

Die im Beispiel von Fig. 1c gezeigten Pigmente 15c sind Perlglanzpigmente, welche ebenfalls eine spezifische Farbe und einen Perlglanz aufweisen, wobei jedoch zusätzlich ein Farbumschlag bzw. Farbflop durch eine Interferenz des reflektieren Lichtes auftreten kann.

Bei diesen Farbflops kann es sich sowohl um einen Hell/dunkel-Flop als auch um einen Farbflop handeln. Damit ist der Farbeindruck auch abhängig von der Beleuchtungs- und Beobachtunggeometrie.

Zur Anwendung kommen auch farbig eingefärbte Substrate wir z.B. Glasflakes oder Flakes auf SlO₂ Basis, welche das Licht gefiltert in eine bestimmte Richtung spiegeln.

Durch eine geeignete spektrale Wahl des beleuchtenden Lichtes ist es auch möglich nicht sichtbare Phänomene, wie z.B. die Wärmerückstrahlung der Pigmente zu charakterisieren.

Figur 2 zeigt ein Beispiel für eine Bildaufnahmeeinheit 4a in Form einer Farbbildkamera bzw. eines Farbbild-CCD-Chips. Diese Bildaufnahmeeinheit 4a weist hier eine Vielzahl von Bildaufnahmeelementen 14 auf, die wiederum in einzelne Unterelemente 14a, 14b, 14c aufgeteilt ist, welche zur Aufnahme unterschiedlicher Farben geeignet sind. Die mit R gekennzeichneten Unterelemente 14a dienen zur Aufnahme von Licht im roten Farbbereich, die mit G gekennzeichneten Unterelemente 14b zur Aufnahme von Licht im grünen Farbbereich und die mit B gekennzeichneten Unterelemente 14c zur Aufnahme von Licht im blauen Spektralbereich. Wenn nun das von den Effektpigmenten, beispielsweise 15c reflektierte Licht einen überwiegend roten Anteil aufweist, jedoch auf die Elemente 14b oder 14c gelangt, so werden diese einen unzutreffenden Wert für die Intensität ausgeben. Es wird daher im Rahmen der Erfindung vorgeschlagen, anstelle des in Figur 2 gezeigten Bildaufnahmeelementes 4a ein Bildaufnahmeelement zu verwenden, welches eine Vielzahl von einheitlichen Detektoren aufweist und welches daher lediglich schwarz/weiß-Bilder aufnehmen bzw. ausgeben kann.

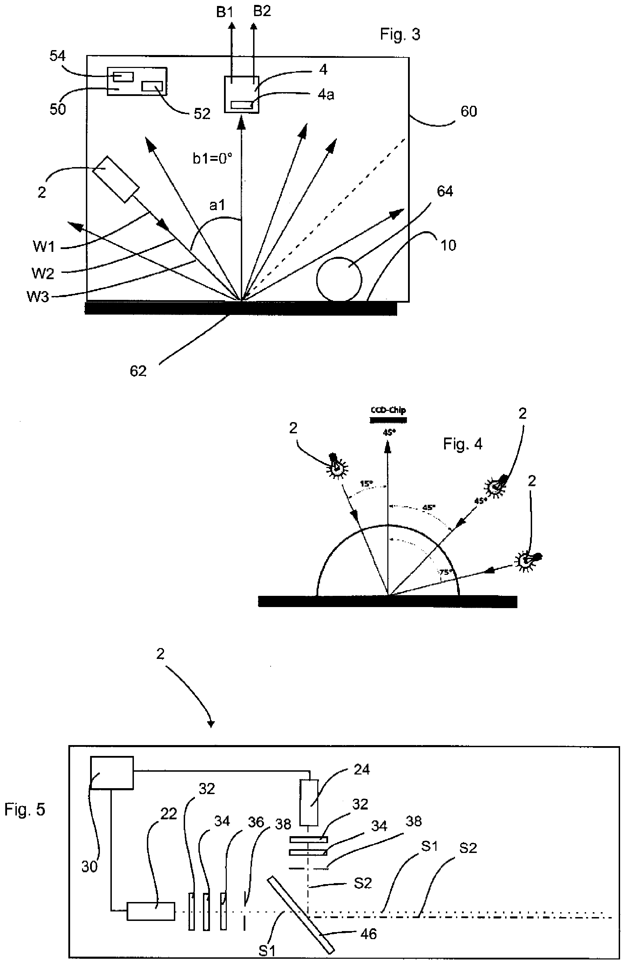

Figur 3 zeigt entsprechend eine erfindungsgemäße Ausgestaltung einer Vorrichtung 1 zum Untersuchen von optischen Oberflächeneigenschaften. Hier wird von einer Strahlungseinrichtung 2 Licht auf die Oberfläche 10 gesendet und das von dieser Oberfläche weiter übermittelte, beispielsweise reflektierte oder gestreute Licht gelangt teilweise auf eine Strahlungsdetektoreinrichtung 4, welche eine Bildaufnahmeeinheit 4a aufweist. Diese Bildaufnahmeeinheit 4a kann dabei zur Aufnahme von ortsaufgelösten Bildern B1, B2, die jeweils schwarz/weiß-Bilder sind, bzw. für solche Bilder charakteristische Datensätze geeignet sein.

Die Strahlungseinrichtung 2 richtet dabei Strahlungen mit einem ersten Wellenlängenbereich W1 und mit einem zweiten Wellenlängenbereich W2 auf die Oberfläche. Dieses Einstrahlen erfolgt dabei wie oben erwähnt zeitlich versetzt. Daneben kann auch noch Strahlung mit dem Wellenlängenbereich W3 auf die Oberfläche eingestrahlt werden. So wäre es möglich, dass nacheinander zunächst grünes, dann rotes, dann blaues Licht auf die Oberfläche eingestrahlt wird und die jeweiligen Reaktionen von der Bildaufnahmeeinheit jeweils als Bilder B1, B2, B3 ausgegeben werden.

Das Bezugszeichen a1 kennzeichnet den Einstrahlwinkel unter dem die Strahlung von der Strahlungseinrichtung 2 auf die Oberfläche 10 eingestrahlt wird. Dieser Winkel ist hier gegenüber einer zu der Oberfläche senkrechten Richtung angegeben. Entsprechend beträgt der Winkel b2, unter dem die Strahlung von der Strahlungsdetektoreinrichtung 4 aufgenommen wird, 0°, d.h. die Strahlung wird vorzugsweise unter einer gegenüber der Oberfläche senkrecht stehenden Richtung aufgenommen.

Das Bezugszeichen 50 kennzeichnet eine Prozessoreinrichtung, die zur Auswertung der von der Bildaufnahmeeinheit 4a aufgenommenen Bilder dient. Die Prozessoreinrichtung 50 weist dabei eine Vergleichseinrichtung 52 auf, welche die aufgenommenen Bilder miteinander vergleicht. Auf diese Weise können beispielsweise die Intensitäten festgehalten werden, die in den unterschiedlichen farblichen Bereichen (von der schwarz/weiß-Bildkamera) aufgenommen wurden. Aus diesem Intensitätenvergleich kann auch auf den farblichen Eindruck entsprechender Effektpigmente geschlossen werden.

Das Bezugszeichen 54 kennzeichnet eine Speichereinrichtung, in der die einzelnen von der Bildaufnahmeeinrichtung 4 aufgenommenen Bilder bzw. die einzelnen Werte, aus denen diese Bilder ableitbar sind, abgespeichert werden. In dieser Speichereinrichtung können Positionsdaten abgespeichert werden, die für eine Position der Vorrichtung 1 gegenüber der Oberfläche charakteristisch sind. Die Vorrichtung 1 kann weiterhin eine Ausgabeeinrichtung aufweisen, um die Daten darzustellen wie etwa ein Display oder dergleichen.

In einer Recheneinrichtung werden mit Hilfe geeigneter Algorithmen die verschiedenen Bilder, bzw. Flakes zur Deckung gebracht. Dadurch werden die zu einem Flake gehörenden Pixel aus allen Bildern bestimmt.

Vorteilhaft weist die erfindungsgemäße Vorrichtung auch eine Positions- bzw. Entfernungserfassungseinrichtung auf, um zwei Aufnahmen, die an unterschiedlichen Orten der Oberfläche 10 aufgenommen wurden, miteinander auch hinsichtlich ihres Abstandes vergleichen zu können. Auf diese Weise ist es möglich, durch eine Vielzahl von Aufnahmen eine komplette Oberfläche, beispielsweise den Teil einer Karosserie eines Fahrzeugs zu vermessen. Es ist erfindungsgemäß, dass sowohl die Strahlungseinrichtung 2 als auch die Strahlungsdetektoreinrichtung 4 in einem Gehäuse 60 angeordnet ist und dieses Gehäuse im Wesentlichen eine Öffnung 62 in einem Bereich aufweist, in dem die Strahlung auf die Oberfläche austreten soll.

Weiterhin kann an dem Gehäuse 60 ein Rad 64 angeordnet sein, welches zum Bewegen der Vorrichtung 1 gegenüber der Oberfläche 10 dient. Vorteilhaft kann dieses Rad dabei auch zur Bestimmung von Entfernungen dienen. Es wäre jedoch auch möglich, dass die Vorrichtung 1 an einem Bewegungselement wie beispielsweise an einem Roboterarm gehalten wird und so gegenüber der zu untersuchenden Oberfläche 10 bewegt wird.

Vorteilhaft werden den von der Bildaufnahmeeinrichtung aufgenommenen Bildern auch Positionen der Vorrichtung gegenüber der Oberfläche 10 zugeordnet, bzw. Daten, welche für diese Positionen charakteristisch sind. Diese Zuordnung erfolgt vorteilhaft mittels einer Prozessoreinrichtung.

Figur 4 zeigt eine Vorrichtung gemäß eines vergleichenden Beispiels. Bei diesem Beispiel ist eine Vielzahl von Strahlungseinrichtungen 2 vorgesehen, welche das Licht unter unterschiedlichen Winkeln (jeweils dargestellt gegenüber der Senkrechten bezüglich der Oberfläche 10) einstrahlen. Auf diese Weise wird die Oberfläche unter den besagten unterschiedlichen Winkeln beleuchtet und das Licht wird hier jeweils in einer senkrecht zu der Oberfläche 10 stehenden Richtung aufgenommen. Jede dieser Strahlungseinrichtungen kann dabei in der oben dargestellten Weise ausgestaltet sein, das heißt zur zeitlich versetzten Ausgabe von Strahlungen unterschiedlicher Wellenlängen geeignet sein.

Vorteilhaft weist die Vorrichtung wenigstens zwei derartige Strahlungseinrichtungen auf, welche die Strahlung unter unterschiedlichen Winkeln auf die Oberfläche einstrahlen und besonders bevorzugt wenigstens drei Strahlungseinrichtungen, welche die Strahlung unter unterschiedlichen Winkeln auf die Oberfläche 10 einstrahlen. Vorteilhaft liegen die Einstrahlrichtungen mehrerer Strahlungseinrichtungen und die Strahlrichtung der von der Oberfläche 10 auf die Bildaufnahmeeinrichtung 4 weitergeleiteten Strahlung in einer Ebene. Es ist aber auch denkbar, dass Strahlungsempfänger und Strahlungseinrichtung nicht in einer Ebene liegen.

Figur 5 zeigt eine Darstellung für eine Strahlungseinrichtung 2. Diese Strahlungseinrichtung weist hier eine erste Strahlungs- bzw. Lichtquelle 22 und eine zweite Strahlungs- bzw. Lichtquelle 24 auf. Die erste Strahlungsquelle 22 strahlt einen Lichtstrahl S1 mit einem Wellenlängenbereich W1 aus, der auf ein Spiegelelement 46, bei dem es sich hier um einen dichroitischen Spiegel handeln kann, trifft. Der Lichtstrahl S1 tritt dabei aufgrund seiner Wellenlänge durch dieses Spiegelelement 46 hindurch.

Die Lichtquelle 24 richtet eine zweite Strahlenkomponente S2 mit einem Wellenlängenbereich W2 ebenfalls auf das Spiegelelement 46. Dieses Spiegelelement 46 ist dabei derart gestaltet, dass er die Strahlung S2 aufgrund der anderen Wellenlänge reflektiert, sodass sowohl die Strahlung S1 als auch die Strahlung S2 kollinear zueinander aus Strahlungseinrichtung 2 austreten. In Figur 5 wurden die beiden Strahlungen S1 und S2 versetzt zueinander gezeigt, um die Funktionsweise zu veranschaulichen, tatsächlich würden jedoch die beiden Strahlungen S1 und S2 direkt übereinander liegen.

Das Bezugszeichen 32 bezieht sich auf ein optisches Element wie beispielsweise eine Streuscheibe, auf welche das von der Lichtquelle 22 bzw. 24 kommende Licht auftrifft. Das Bezugszeichen 34 kennzeichnet ein weiteres optisches Element wie beispielsweise eine Linseneinrichtung, die zum Bündeln der Strahlung S1 bzw. S2 dient. Das Bezugszeichen 36 kann ein weiteres optisches Element wie beispielsweise ein Filterelement darstellen, das nur einen bestimmten Wellenlängenanteil austreten lässt. Das Bezugszeichen 38 bezieht sich jeweils auf eine Blendeneinrichtung, die ebenfalls zum Bilden eines sauberen Lichtstrahls S1 bzw. S2 dient. Die Reihenfolge der Elemente 32, 34, 36, 38 in Richtung der Lichtstrahlen kann je nach Anwendung auch anders gestaltet sein.

Zusätzlich zu den beiden Lichtquellen 22 und 24 könnte auch noch eine weitere Lichtquelle 26 vorgesehen sein, welche beispielsweise in Figur 5 rechts neben der Lichtquelle 24 angeordnet sein kann und die ebenfalls einen Strahl S3 (nicht gezeigt) vertikal nach unten auf ein weiteres Spiegelelement (nicht gezeigt) richtet. In diesem Falle würden aus der Strahlungseinrichtung 2 drei zueinander kollineare Strahlen bzw. Bündel S1, S2, S3 austreten. Optische Elemente 32, 34, 36, 38 könnten auch nach den Spiegelelementen 46 angeordnet sein.

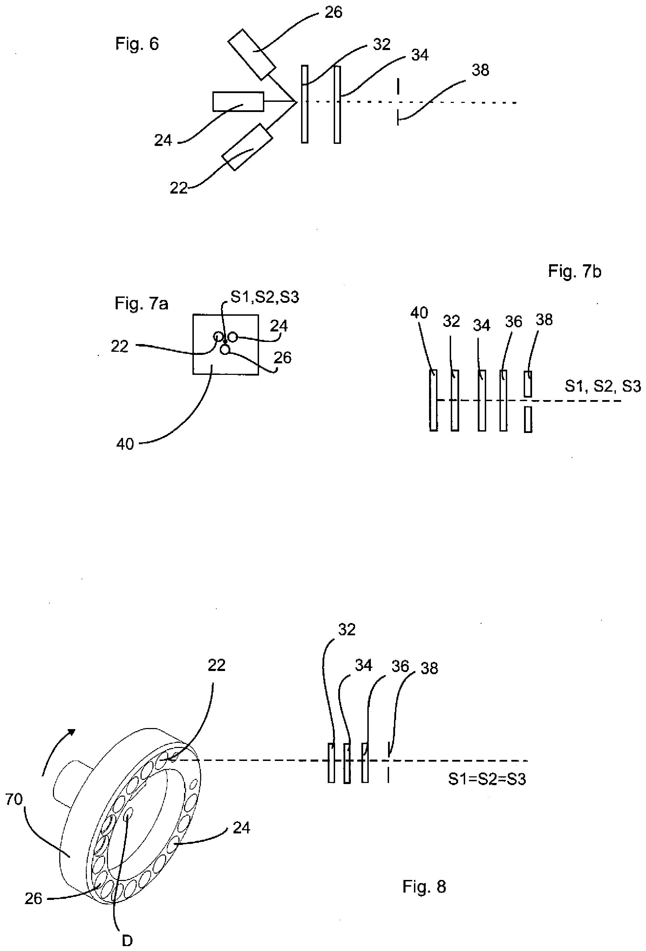

Figur 6 zeigt eine weitere Ausführungsform für eine Strahlungseinrichtung 2. Bei dieser Ausführungsform sind drei Strahlungsquellen 22, 24, 26 vorgesehen, die jeweils ihr Licht auf eine Streuscheibe 32 richten. Die Streuscheibe kann dabei ein holographisches optisches Element sein. Dabei sind die Lichtquellen 22, 24, 26 derart angeordnet, dass sie ihr Licht auf einen gleichen Bereich bzw. gleichen Punkt der Streuscheibe 32 richten. Um dies zu erreichen können zwischen den Lichtquellen und der Streuscheibe 32 auch reflektive Elemente, wie beispielsweise Linsen, Zylinderlinsen, Lochblenden und dergleichen, angeordnet sein.

Entlang der Strahlenpfade S1, S2, S3 können auch weitere optische Elemente wie Linsen 34 oder Lochblenden 38 oder dergleichen vorgesehen sein.

Das Bezugszeichen 30 sowohl in Figur 5 als auch in Figur 6 bezieht sich auf eine Steuereinrichtung, welche die Strahlungsausgabe durch die Strahlungseinrichtung 2 steuert. Dabei kann die Strahlungseinrichtung derart gesteuert sein, dass die einzelnen Lichtquellen 22, 24, 26 ihr Licht zeitlich versetzt zueinander abgeben. Auch kann es je nach Messprinzip gewollt sein, dass die Lichtquellen 22, 24, 26 zumindest zeitweise gleichzeitig Licht abgeben, sodass insgesamt eine Mischung von Licht, beispielsweise ein bestimmter Typ eines Weißlichts entstehen kann.

Die Fig. 7a, 7b zeigen eine weitere Ausführungsform einer Strahlungseinrichtung 2. Bei dieser einer Ausführungsform können die Lichtquellen 22, 24, 26 beispielsweise als LED Halbleiterchips auf einen Träger 40 bzw. ein Substrat, z.B. Keramik aufgebracht werden. Diese werden anschließend kontaktiert (gebonded) um die Möglichkeit zu schaffen diese einzeln anzusteuern. Da die Halbleiterchips z.T. deutlich kleiner als 0,5 mm² in der Abmessung sind, können diese sehr nahe zueinander platziert werden. Damit ist die Abweichung der einzelnen Chips, welche eine unterschiedliche spektrale Strahlungscharakteristik aufweisen, von der optischen Achse des Beleuchtungssystem nur sehr gering und man kann von einer kolinearen Beleuchtung (S1, S2, S3) sprechen. In den Strahlengang können auch hier Streuscheiben 32, Blenden 38, Linsen 34, Filter 36, holographische optische Elemente (nicht gezeigt) eingebracht werden.

Fig. 8 zeigt eine weitere Möglichkeit für die Realisierung der Beleuchtung. Hier sind mehrere LEDs 22, 24, 26 auf einem um eine Drehachse D drehbaren Rad angeordnet. Sobald eine LED mit der optischen Achse des Beleuchtungssystems (S1 = S2 = S3) fluchtet, wird diese aktiviert und beleuchtet über verschieden optische Komponenten, wie z. B Streuscheiben 32 , Blenden 38, optische Filter 36, Linsen 34, holographische optische Elemente die Oberfläche. Anschließend wird das Rad weitergedreht, bis die nächste LED leuchtet.

Bei einem Ablauf des erfindungsgemäßen Verfahrens wird also zunächst Licht in einer ersten Wellenlänge W1 auf die Oberfläche und von der Oberfläche auf die Bildaufnahmeeinheit 4a gerichtet. Danach wird Licht mit dem Wellenlängenbereich W2 eingestrahlt und entsprechend aufgenommen. Anschließend werden von der Bildaufnahmeeinheit die entsprechenden Bilder B1 und B2 (bzw. die entsprechenden Werte) an eine Prozessoreinheit übergeben und von dieser miteinander verglichen. Auf Basis dieses Vergleichs kann die Prozessoreinheit 50 Informationen ausgeben, welche für die Oberfläche und insbesondere auch deren Effektpigmente charakteristisch sind. Insbesondere können dabei auch Informationen über farbliche Eigenschaften der Effektpigmente ausgegeben werden. Es können jedoch auch die Bilddaten zu jedem einzelnen Wellenlängenbereich getrennt ausgewertet werden, beispielsweise hinsichtlich einer maximalen Intensität der auf die Bildaufnahmeeinheit auftreffenden Strahlung. Auch durch diese Auswertung ist es möglich, farbliche Informationen zu gewinnen, ob wohl als Bildaufnahmeeinrichtung eine Schwarz-Weiß - Bildkamera verwendet wird bzw. eine Strahlungsdetektoreinrichtung, die selbst keine Farbinformationen ausgibt.

In nicht-erfindungsgemäßen, vergleichenden Beispielen wäre es anstelle der in Figur 5 und Figur 6 gezeigten Ausführungsformen auch möglich, dass lediglich eine Lichtquelle 22 vorhanden ist, welche beispielsweise Weißlicht abgibt und zwischen der Lichtquelle 22 und der Oberfläche 10 ein Filterelement mit veränderlichen Filtern vorgesehen ist, beispielsweise ein Filterrad, oder ein durchstimmbares Filter welches in den Strahlengang unterschiedliche Filterelemente platzieren kann, die jeweils unterschiedliche Farbanteile des Lichts auf die Oberfläche gelangen lassen. Auch durch diese Vorrichtung kann die Oberfläche aufeinanderfolgend mit wechselnden Farben beleuchtet werden.

Die erfindungsgemäße Vorrichtung sowie das erfindungsgemäße Verfahren können zur Qualitätssicherung in Verbindung mit Lacken und insbesondere im KFZ - Reparaturbereich eingesetzt werden, insbesondere bei der Verwendung von Effektpigmentlacken. Im Einzelnen kann mit der erfindungsgemäßen Vorrichtung ein geeigneter Reparaturlack ermittelt werden. Daneben wäre es auch möglich, dass die erfindungsgemäße Vorrichtung Daten ausgibt, welche von einer Matching - Software genutzt wird, um die Daten eines Ersatzlacks zu bestimmen.

Die aufgenommenen Bilder können in unterschiedlichster Weise ausgewertet werden. Es wird in diesem Zusammenhang darauf hingewiesen, dass die Bildauswertung nicht die hier beschriebenen schwarz-weiß aufgenommenen Bilder voraussetzt, sondern auch entsprechend auf Farbbilder anwendbar ist. Damit kann es sich hier bei der Strahlungsdetektoreinrichtung auch um eine Farbbildkamera, einen CCD-Chip oder dergleichen handeln. So wäre es beispielsweise möglich, die aufgenommenen Bilder durch Diagramme, wie ein Histogramm des Gesamtbildes zu charakterisieren. Dabei können im Rahmen des Histogramms die Zeilen oder Spalten (der aufgenommenen Bilder) jeweils einzeln betrachtet werden und beispielsweise pro Spalte oder pro Zeile Intensitätswerte ausgegeben werden. Auch wäre es möglich, dass mehrere Zeilen bzw. Spalten jeweils zu Gruppen zusammengefasst werden und entsprechende Mittelwerte gebildet werden.

Bei einem weiteren anwendbaren Verfahren kann das Bild binärisiert werden, beispielsweise unter Verwendung eines Schwellwertverfahrens. Der Schwellwert kann dabei wiederum über unterschiedliche Verfahren charakterisiert werden, wie zum Beispiel über einen fest definierten Wert oder auch eine variable Größe (diese variable Größe kann beispielsweise auf statistischen Kenngrößen basieren).

Daneben können auch Algorithmen eingesetzt werden, wie etwa ein Kanten-Detektionsalgorithmus, der zur Separation von Pigmenten oder Flakes verwendet wird.

Bei weiteren optischen Verfahren kann eine messtechnische bzw. bildaufbereitungsmäßige Trennung von Flakes einerseits und Defekten, wie Kratzern, Oberflächendefekten oder auch Staub andererseits durchgeführt werden. Dabei ist es möglich, dass beispielsweise ein Unterscheidungsmerkmal eingeführt wird, etwa ein Unterscheidungsmerkmal für eine örtliche Ausdehnung. Anhand dieses Unterscheidungsmerkmals ist es möglich, beispielsweise (langestreckte) Kratzer einerseits von Flakes zu unterscheiden, aber auch Oberflächendefekte oder die Einflüsse von Staub untereinander oder von Flakes zu unterscheiden.

Bei einem weiteren vorteilhaften Verfahren wird durch eine Auswertung des Bildes eine Größe und/oder Größenverteilung des Flakes ermittelt. Daneben oder zusätzlich kann auch eine Flakes-Helligkeitsverteilung ermittelt werden, beispielsweise in Abhängigkeit von einem Beleuchtungswinkel und/oder dem besagten Schwellwert. Daneben ist es auch möglich, bei der Ermittlung von Effektkenngrößen integrale Informationen der einzelnen Schwarz-Weiß-Detektoren oder bei Verwendung eines Farbbildes von Farbdetektoren einzusetzen.

Bei einem weiteren vorteilhaften Verfahren ist es auch möglich, den Kontrast zwischen einem Flake und dem Untergrund bzw. Hintergrund, auf dem sich dieses Flake findet, zu berechnen. Diese Berechnung kann dabei mit statistischen Vorgehensweisen vorgenommen werden und/oder auch durch Mittelwertbildung, Differenzierungen und dergleichen. Weiterhin kann ein korrelierender Farbwert, beispielsweise ein CIELab korrelierender Farbwert für die zu detektierenden Flakes ermittelt werden. Zur Ermittlung kann dabei eine Farbkamera und/oder eine geeignete Beleuchtung, wie insbesondere, aber nicht ausschließlich eine RGB-Beleuchtung, eingesetzt werden.

Weiterhin können auch Verfahren zur Reduzierung der Rechenzeit angewandt werden. So können beispielsweise an sich zwei dimensionale Rechenoperationen, wie beispielsweise mathematische Filter in nur einer Dimension angewandt werden. Daneben kann die Berechnung der Effektparameter auch mittels externen (z.B. allein betreibbaren (stand alone)) Rechnern durchgeführt werden oder auch beispielsweise über das Internet an einen Zentralrechner weitergeleitet werden. Die einzelnen Effektparameter können dabei durch unterschiedliche Kriterien beschrieben werden, wie beispielsweise die Flake-Helligkeit, eine Flake-Größe, eine Flake-Dichte, eine örtliche Flake-Verteilung und/oder dergleichen. So ermittelte Werte können auch mit in einer Datenbank abgelegten Werten verglichen werden.

Weiterhin ist es auch möglich, sogenannte HDR (High-Dynamic-Range) Bilder dadurch zu erzeugen, dass mehrere Bilder zusammengefügt werden, welche beispielsweise mit unterschiedlichen Belichtungszeiten und/oder mit verschieden hell eingestellten Lichtquellen und/oder durch unterschiedliche Farbbeleuchtung gewonnen wurden. Vorteilhaft können dabei solche HDR-Bilder als Histogramme oder auch als zweidimensionales Image dargestellt werden.

Daneben ist es auch möglich, dass die einzelnen Oberflächenparameter durch Anwendung verschiedener Operatoren oder Berechnungen durchgeführt werden. Dabei sind diese Operatoren vorteilhaft aus einer Gruppe von Operatoren oder Berechnungen ausgewählt, welche Laplace-Filter, Gabor-Filter, Momentum-Analysen, Co-Occurrence-Matrix, Haralick Merkmale. (Energie, Entropie), LBP (local binary pattern) und/oder Autokorrelationsfunktion enthalten. Daneben können auch Mustererkennungsalgorithmen auf der Basis mehrerer Merkmalsparameter durchgeführt werden. Daneben können auch Fourier - Analysen durchgeführt werden.

Übereinstimmung zwischen mehreren Messinstrumenten (interinstrument agreement) kann durch Referenzierung von Proben, Bildern und beispielsweise Vergleich mit gespeicherten Bildern eines Bezugsstandards vorgenommen werden.

Zur Effizienzsteigerung können beispielsweise verschiedenfarbige HB-LEDs (High Brithtness LEDs) in einem Beleuchtungssystem, insbesondere zur Ermittlung einer Flakefarbe eingesetzt werden. Weiterhin kann insbesondere bei Aufnahme von Farbbildern eine Farbmischung durch Strahlteiler und/oder auch insbesondere dichroitische Filter erfolgen.

In diesem Zusammenhang wird auf die DE 10 2007 053 574 A1 hingewiesen. Insbesondere zur Verbesserung einer bestehenden Kameraleistungsfähigkeit ist es möglich, eine C-MOS Kamera einzusetzen, welche ein deutlich geringeres Rauschen und einen geringeren Offset aufweist. Daneben können auch Verbesserungen der Primär- bzw. Sekundäroptik vorgenommen werden, beispielsweise durch die Verwendung von kleinen Irisblenden. Auf diese Weise kann beispielsweise die Tiefenschärfe erhöht werden oder es kann auch eine variable Belichtungszeiteinstellung vermieden werden.

Erfindungsgemäß werden farbige "Flakes" (Mika, Xirallics) durch die Verwendung von mehreren, insbesondere von wenigstens zwei und insbesondere von drei LEDs aufgelöst bzw. differenziert. Vorteilhaft werden dabei rote, grüne und blaue LEDs eingesetzt. Daneben können diese drei LEDs mittels dichroitischer Filter bzw. durch den Einsatz von Umlenkspiegeln auf eine gemeinsame optische Achse gebracht und besonders bevorzugt sequenziell geschaltet werden. Die Detektion derartiger Bilder erfolgt mithilfe einer Schwarz-Weiß-Kamera.

Vorteilhaft kann die Messdynamik auch durch eine Anpassung und/oder Kaskadierung eines Betriebsstromes der beleuchtenden LEDs erhöht werden, wie dies bereits in der Vergangenheit durch die Anmelderin beschrieben wurde.

Außerdem können auch diese genannten Messverfahren insbesondere im Bereich der Rezeptierung, der Qualitätssicherung und des Lookups verwendet werden, wobei besonders bevorzugt eine Identifikation eines Lackes und/oder einer Farbe durch eine Mehrwinkelfarbmessung und eine Farbbildanalyse erfolgt. Vorteilhaft wird unter wenigstens zwei Winkeln, besonders bevorzugt unter wenigstens drei Winkeln gemessen.

Dabei wären auch goniometrische Messungen möglich, wie etwa in der DE 20 2004 011 8011 U1 beschrieben. Daneben ist auch ein Verfahren zur optischen Untersuchung strukturierter Oberflächen einsetzbar, wie etwa in der DE 10 2009 033 110 A1 beschrieben.

Ein Messverfahren zur Ermittlung der Oberflächeneigenschaften durch Einstrahlung unter mehreren Einstrahlwinkeln wurde beispielsweise in der DE 10 2008 051 513 A1 (ebenfalls der vorliegenden Anmelderin) beschrieben.

Daneben können auch Auswerteverfahren für zu untersuchende Flächen eingesetzt werden, bei denen für einen bestimmten Flächenanteil ein Wert, der den Flächenanteil optisch charakterisiert mit einem weiteren Wert, der diesen Flächenanteil charakterisiert (etwa eine Masszahl für die Größe der Fläche dieses Anteils), mathematisch verknüpft werden. So kann beispielsweise auch die Größe dieses Flächenanteils bei der Auswertung berücksichtigt werden.

Allgemein ist es auch möglich, dass zur Beurteilung der Oberflächen und insbesondere von Flakes mehr als zwei Parameter herangezogen werden, welche insbesondere aus einer Gruppe von Parametern ausgewählt sind, welche die Farbe, die Planizität, die topographische Struktur, das integrale Reflexionsvermögen, das winkelmäßig aufgelöste Reflektionsvermögen, Größen der Flakes, Verteilungen der Flakes, Streukenngrößen, Kombinationen hieraus oder dergleichen enthält. Dabei können auch unterschiedliche Sorten bzw. Gruppen von Flakes charakterisiert werden, wobei sowohl eine Charakterisierung eines einzelnen Flaketypus wie auch einer Gruppe von Flaketypen denkbar ist.

### Bezugszeichenliste

- 1: Vorrichtung
- 2: Strahlungseinrichtung
- 4: Strahldetektoreinrichtung
- 4a: Bildaufnahmeeinheit
- 10: Oberfläche
- 14: Bildaufnahmeelemente
- 14a, 14b, 14c: Unterelemente
- 15a: absorbierende Pigmente
- 15b: Metallfarbpigmente
- 15c: Perlglanzpigmente
- 22, 24,26: Lichtquellen
- 30: Steuereinrichtung
- 32: optisches Element (Streuscheibe)
- 34: optisches Element (Linseneinrichtung)
- 36: optisches Element (Filterelement)
- 38: Blendeneinrichtung
- 40: Träger
- 46: Spiegelelement
- 50: Prozessoreinrichtung
- 52: Vergleichseinrichtung
- 54: Speichereinrichtung
- 60: Gehäuse
- 62: Öffnung
- 64: Rad
- 70: Rad
- B1, B2, B3: ortsaufgelöste Bilder
- R: Bildaufnahmeelemente zur Aufnahme von Licht im roten Farbbereich
- G: Bildaufnahmeelemente zur Aufnahme von Licht im grünen Farbbereich
- B: Bildaufnahmeelemente zur Aufnahme von Licht im blauen Farbbereich
- W1, W2, W3: Wellenlängenbereiche
- S1, S2, S3: Lichtstrahlen
- a1: Einstrahlwinkel
- b1: Erfassungswinkel
- D: Drehachse

## Patentansprüche

1. Verfahren zum Untersuchen von optischen Oberflächeneigenschaften von Oberflächen (10), wobei die Oberfläche (10) eine mit einer Lackschicht versehene Oberfläche (10) ist und die Lackschicht Effektpigmente aufweist, wobei mit einer Strahlungseinrichtung (2) unter einem vorgegebenen Einstrahlwinkel (a1) gegenüber der Oberfläche (10) Strahlung auf die zu untersuchende Oberfläche (10) eingestrahlt wird und die von dieser Oberfläche (10) gestreute und/oder reflektierte Strahlung auf eine unter einem vorgegebenen Erfassungswinkel (b1) gegenüber der Oberfläche (10) angeordnete Strahlungsdetektoreinrichtung (4) mit einer schwarz-weiß-Bilder aufnehmenden Bildaufnahmeeinheit (4a) gelangt, wobei die Bildaufnahmeeinheit (4a) eine Vielzahl von identischen Fotoelementen aufweist, wodurch diese zur Aufnahme von Schwarz/weiß- oder Graustufenbildern geeignet ist, wobei diese Strahlungsdetektoreinrichtung (4) eine ortsaufgelöste Erfassung der auf sie auftreffenden Strahlung ermöglicht und sowohl die Strahlungseinrichtung (2) als auch die Strahlungsdetektoreinrichtung (4) in einem Gehäuse (60) angeordnet ist und dieses Gehäuse (60) im Wesentlichen eine Öffnung (62) in einem Bereich aufweist, in dem die Strahlung auf die Oberfläche (10) austritt, wobei die Strahlungseinrichtung (2) Strahlung mit einem ersten Wellenlängenbereich (W1) auf die Oberfläche (10) richtet und die Bildaufnahmeeinheit (4) ein erstes ortsaufgelöstes Bild (B1) dieser von der Oberfläche (10) gestreuten und/oder reflektierten Strahlung aufnimmt und die Strahlungseinrichtung (2) Strahlung mit einem zweiten Wellenlängenbereich (W2) auf die Oberfläche (10) richtet und die Bildaufnahmeeinheit (4a) ein zweites ortsaufgelöstes Bild (B2) dieser von der Oberfläche (10) gestreuten und/oder reflektierten Strahlung aufnimmt,
wobei die Strahlung mit dem ersten Wellenlängenbereich (W1) und die Strahlung mit dem zweiten Wellenlängenbereich (W2), der sich von dem ersten Wellenlängenbereich (W1) wenigstens teilweise unterscheidet wenigstens teilweise zeitlich versetzt auf die Oberfläche (10) gerichtet werden und die Strahlung mit dem ersten Wellenlängenbereich (W1) sowie die Strahlung mit dem zweiten Wellenlängenbereich (W2) unter dem gleichen Einstrahlwinkel (a1) auf die Oberfläche (10) eingestrahlt werden, wobei die Strahlungseinrichtung (2) eine Leuchtdiode als erste Lichtquelle (22), welche Strahlung in dem ersten Wellenlängenbereich (W1) abgibt, sowie eine Leuchtdiode als zweite Lichtquelle (24), welche Strahlung in dem zweiten Wellenlängenbereich (W2) abgibt, aufweist, wobei die einzelnen farbigen Effektpigmente hinsichtlich ihrer Farbe durch die Verwendung mehrerer Leuchtdioden (22,24,26) aufgelöst werden und wobei es sich bei der von der Oberfläche (10) gestreuten und/oder reflektierten Strahlung um diejenige Strahlung handelt, welche als Folge der von der Strahlungseinrichtung (2) eingestrahlten Strahlung auf die Bildaufnahmeeinheit (4a) weitergeleitet wird, wobei das erste Bild (B1) und das zweite Bild (B2) miteinander verglichen oder verrechnet werden
**dadurch gekennzeichnet, dass** sich der Vergleich auf einzelne Pixelbezirke des Bildes bezieht, wobei die Pixelbezirke durch eine mathematische Schwellenwertbildung auf Pixelebene oder im Histogramm festgelegt werden und wobei die mathematische Schwellenwertbildung dynamisch erfolgt und die Schwellenwertbildung von Bildinformationen wie Bildhelligkeit, Bildkontrast abgeleitet wird.

2. Verfahren nach Anspruch 1,
**dadurch gekennzeichnet, dass**
Bilder (B1,B2) oder Ausschnitte dieser Bilder (B1,B2) mathematisch zur Deckung gebracht werden.

3. Verfahren nach wenigstens einem der vorangegangenen Ansprüche, **dadurch gekennzeichnet, dass** unter dem ersten Einstrahlwinkel (a1) Strahlung mit einem dritten Wellenlängenbereich (W3), der sich von dem ersten Wellenlängenbereich (W1) und auch von dem zweiten Wellenlängenbereich (W2) unterscheidet, auf die Oberfläche (10) eingestrahlt wird und die Bildaufnahmeeinheit (4a) die von der Oberfläche (10) reflektierte und/oder gestreute Strahlung aufnimmt und so ein drittes ortsaufgelöstes Bild (B3) aufnimmt.

4. Vorrichtung zum Untersuchen von optischen Oberflächeneigenschaften, wobei eine zu untersuchende Oberfläche (10) eine mit einer Lackschicht versehene Oberfläche (10) ist und die Lackschicht Effektpigmente aufweist, mit einer ersten Strahlungseinrichtung (2), welche Strahlung unter einem vorgegebenen Einstrahlwinkel (a1) auf eine zu untersuchende Oberfläche (10) richtet, mit einer Strahlungsdetektoreinrichtung (4), welche die auf die Oberfläche (10) von der ersten Strahlungseinrichtung (2) eingestrahlte und von der Oberfläche (10) unter einem Erfassungswinkel (b1) zurückgeworfene Strahlung aufnimmt, wobei die Strahlungsdetektoreinrichtung (4) eine ortsaufgelöste schwarz-weiß-Bilder aufnehmende Bildaufnahmeeinheit (4a) aufweist, wobei die Bildaufnahmeeinheit (4a) eine Vielzahl von identischen Fotoelementen aufweist, wodurch diese zur Aufnahme von Schwarz/weiß- oder Graustufenbildern ausgelegt ist, wobei sowohl die Strahlungseinrichtung (2) als auch die Strahlungsdetektoreinrichtung (4) in einem Gehäuse (60) angeordnet ist und dieses Gehäuse (60) im Wesentlichen eine Öffnung (62) für den Austritt der Strahlung auf die Oberfläche (10) aufweist, und wobei es sich bei der von der Oberfläche (10) zurückgeworfenen Strahlung um diejenige Strahlung handelt, welche als Folge der von der Strahlungseinrichtung (2) eingestrahlten Strahlung auf die Bildaufnahmeeinheit (4a) weitergeleitet wird,
wobei die Strahlungseinrichtung (2) derart gestaltet ist, dass sie zur wenigstens teilweise zeitlich versetzten Ausgabe von Strahlung mit wenigstens zwei unterschiedlichen Wellenlängenbereichen (W1, W2) unter dem gleichen Einstrahlwinkel (a1) ausgelegt ist, wobei die Strahlungseinrichtung (2) eine Leuchtdiode als erste Lichtquelle (22) für die Abgabe von Strahlung in dem ersten Wellenlängenbereich (W1), sowie eine weitere Leuchtdiode als zweite Lichtquelle (24) für die Abgabe von Strahlung in dem zweiten Wellenlängenbereich (W2), aufweist, und die Bildaufnahmeeinheit (4a) zur Aufnahme von einem ersten Bild (B1), welches zu der Strahlung mit dem ersten Wellenlängenbereich (W1) korrespondiert und zur Aufnahme von einem zweiten Bild (B2), welches zu der Strahlung mit dem zweiten Wellenlängenbereich (W2) korrespondiert, ausgelegt ist und wobei die Vorrichtung zur Auflösung der einzelnen farbigen Effektpigmente hinsichtlich ihrer Farbe durch die Verwendung mehrerer Leuchtdioden ausgelegt ist, wobei die Vorrichtung eine Vergleichseinrichtung (30) zum Vergleich des ersten Bildes (B1) mit dem zweiten Bild (B2) aufweist,
**dadurch gekennzeichnet, dass** sich der Vergleich auf einzelne Pixelbezirke des Bildes bezieht, wobei die Pixelbezirke durch eine mathematische Schwellenwertbildung auf Pixelebene oder im Histogramm festgelegt werden und wobei die mathematische Schwellenwertbildung dynamisch erfolgt und die Schwellenwertbildung von Bildinformationen wie Bildhelligkeit, Bildkontrast abgeleitet wird.

5. Vorrichtung nach Anspruch 4, **dadurch gekennzeichnet, dass**
die Strahlungseinrichtung (2) eine Strahlungsleitanordnung (40) aufweist, welche bewirkt, dass die Strahlung in dem ersten Wellenlängenbereich (W1) und die Strahlung in dem zweiten Wellenlängenbereich (W2) unter dem gleichen Einstrahlwinkel (α1) auf die Oberfläche (10) eingestrahlt werden.

6. Vorrichtung (1) nach Anspruch 5
**dadurch gekennzeichnet, dass** die Strahlungsleitanordnung (40) wenigstens ein Spiegelelement (42) aufweist.

7. Vorrichtung (1) nach Anspruch 4, **dadurch gekennzeichnet, dass**
die Vorrichtung (1) eine Prozessoreinrichtung (50) aufweist, welche aus einem Vergleich der aufgenommenen Bilder eine Information ermittelt, welche für eine Farbe wenigstens eines Abschnitts der Oberfläche (10) charakteristisch ist.

## Claims

1. A method of investigating optical surface properties of surfaces (10), wherein the surface (10) is a surface (10) provided with a layer of paint and the layer of paint has effect pigments, wherein radiation is irradiated by an irradiation device (2) at a pre-set angle of incidence (a1) with respect to the surface (10) onto the surface (10) to be investigated, and the radiation scattered and/or reflected by this surface (10) arrives at a radiation detector device (4) arranged at a pre-set detection angle (b1) with respect to the surface (10) and having an image-recording unit (4a) which records black-and-white images, wherein said image-recording unit (4a) comprises a plurality of identical image elements, whereby it is suitable for recording black/white or grayscale images wherein this radiation detector device (4) permits a spatially resolved detection of the radiation reaching it, and both the irradiation device (2) and the radiation detector device (4) are disposed in a housing (60) and said housing (60) has substantially an opening (62) in an area where the irradiation exits onto the surface (10), wherein the irradiation device (2) directs radiation in a first wavelength range (W1) onto the surface (10) and the image-recording unit (4) records a first spatially resolved image (B1) of this radiation scattered and/ or reflected from the surface (10) and the irradiation device (2) directs radiation in a second wavelength range (W2) onto the surface (10) and the image-recording unit (4a) records a second spatially resolved image (B2) of this radiation scattered and/ or reflected from the surface (10), wherein the radiation in the first wavelength range (W1) and the radiation in the second wavelength range (W2), which differs from the first wavelength range (W1) at least in part, are directed staggered at least in part in terms of time onto the surface (10), and the radiation in the first wavelength range (W1) and the radiation in the second wavelength range (W2) are irradiated at the same angle of incidence (a1) onto the surface (10), wherein the irradiation device (2) comprises a light-emitting diode as a first light source (22) which emits radiation in the first wavelength range (W1), and a light-emitting diode as a second light source (24) which emits radiation in the second wavelength range (W2), wherein the individual coloured effect pigments are dissolved with respect to their colour by the use of a plurality of light-emitting diodes (22, 24, 26), and the radiation scattered and/or reflected from the surface (10) being the radiation which is transmitted to image-recording unit (4a) as a result of the radiation irradiated by the irradiation device (2), wherein the first image (B1) and the second image (B2) are compared or calculated with each other,
**characterized in that**
the comparison refers to individual pixel areas of the image, the pixel areas being defined by a mathematical threshold value formation at pixel level or in the histogram, and the mathematical threshold value formation taking place dynamically and the threshold value formation being derived from image information such as image brightness, image contrast.

2. A method according to claim 1,
**characterized in that**
images (B1, B2) or details of these images (B1, B2) are lined up mathematically.

3. A method according to at least one of the preceding claims,
**characterized in that**
radiation in a third wavelength range (W3) which differs from the first wavelength range (W1) and also from the second wavelength range (W2) is irradiated onto the surface (10) at the first angle of incidence (a1) and the image-recording unit (4a) records the radiation reflected and/or scattered by the surface (10), and in this way it records a third spatially resolved image (B3).

4. An apparatus for investigating optical surface properties, wherein the surface (10) to be investigated is a surface (10) provided with a layer of paint and the layer of paint has effect pigments, with a first irradiation device (2) which directs radiation at a pre-set angle of incidence (a1) onto a surface (10) to be investigated, with a radiation detector device (4) which records the radiation irradiated onto the surface (10) by the first irradiation device (2) and reflected back from the surface (10) at a detection angle (b1), wherein the radiation detector device (4) has an image-recording unit (4a) which records spatially resolved black-and-white images, wherein said image-recording unit (4a) comprises a plurality of identical image elements, whereby it is suitable for recording black/white or grayscale images, wherein both the irradiation device (2) and the radiation detector device (4) are arranged in a housing (60) and said housing (60) has substantially an opening (62) for the emission of the radiation onto the surface (10) and wherein the radiation reflected from the surface (10) is that radiation which is transmitted to the image-recording unit (4a) as a result of the radiation irradiated by the irradiation device (2), wherein the irradiation device (2) is designed in such a way that it is suitable for the delivery - staggered at least in part in terms of time - of radiation in at least two different wavelength ranges (W1, W2) at the same angle of incidence (a1), wherein the irradiation device (2) comprises a light-emitting diode as a first light source (22) for emitting radiation in the first wavelength range (W1), and a further light-emitting diode as a second light source (24) for emitting radiation in the second wavelength range (W2), and the image-recording unit (4a) is suitable for recording a first image (B1) which corresponds to the radiation in the first wavelength range (W1), and for recording a second image (B2) which corresponds to the radiation in the second wavelength range (W2) and wherein the apparatus is adapted to dissolve the individual coloured effect pigments with respect to their colour by the use of a plurality of light-emitting diodes, wherein the apparatus comprises a comparison means (30) for comparing the first image (B1) with the second image (B2),
**characterized in that**
the comparison refers to individual pixel areas of the image, the pixel areas being defined by a mathematical threshold value formation at pixel level or in the histogram and the mathematical threshold value formation taking place dynamically and the threshold value formation being derived from image information such as image brightness, image contrast.

5. An apparatus according to claim 4,
**characterized in that**
the irradiation device (2) has an irradiation guiding arrangement (40) which has the effect that the radiation in the first wavelength range (W1) and the radiation in the second wavelength range (W2) are irradiated onto the surface (10) at the same angle of incidence (α1).

6. An apparatus (1) according to claim 5,
**characterized in that**
the irradiation guiding arrangement (40) has at least one mirror element (42).

7. An apparatus (1) according to claim 4,
**characterized in that**
the apparatus (1) has at least one processor device (50) which establishes information, which is characteristic of a colour of at least one portion of the surface (10), from a comparison of the recorded images.

## Revendications

1. Procédé d'analyse de propriétés de surface optiques de surfaces (10), dans lequel la surface (10) est une surface (10) dotée d'une couche de vernis et la couche de vernis présente des pigments à effet, dans lequel un rayonnement est irradié sur la surface (10) à analyser avec un équipement rayonnant (2) selon un angle d'irradiation (a1) prédéterminé par rapport à la surface (10) et le rayonnement diffusé et/ou réfléchi depuis cette surface (10) parvient sur un équipement de détection de rayonnement (4) agencé selon un angle de saisie (b1) prédéterminé par rapport à la surface (10) avec une unité de prise d'image (4a) prenant des images noir et blanc, dans lequel l'unité de prise d'image (4a) présente une pluralité d'éléments photographiques identiques, par laquelle ceux-ci sont appropriés pour prendre des images noir et blanc ou à gamme de gris, dans lequel cet équipement de détection de rayonnement (4) permet une saisie à résolution spatiale du rayonnement allant à sa rencontre et tant l'équipement rayonnant (2) que l'équipement de détection de rayonnement (4) est agencé dans un logement (60) et ce logement (60) présente essentiellement une ouverture (62) dans une région dans laquelle le rayonnement émerge sur la surface (10), dans lequel l'équipement rayonnant (2) pointe un rayonnement avec une première plage de longueurs d'onde (W1) sur la surface (10) et l'équipement de détection de rayonnement (4) prend une première image à résolution spatiale (B1) de ce rayonnement diffusé et/ou réfléchi depuis la surface (10) et l'équipement rayonnant (2) pointe un rayonnement avec une deuxième plage de longueurs d'onde (W2) sur la surface (10) et l'unité de prise d'image (4a) prend une deuxième image à résolution spatiale (B2) de ce rayonnement diffusé et/ou réfléchi depuis la surface (10), dans lequel le rayonnement avec la première plage de longueurs d'onde (W1) et le rayonnement avec la deuxième plage de longueurs d'onde (W2), qui se différencie au moins partiellement de la première plage de longueurs d'onde (W1), sont pointés au moins partiellement décalés dans le temps sur la surface (10) et le rayonnement avec la première plage de longueurs d'onde (W1) ainsi que le rayonnement avec la deuxième plage de longueurs d'onde (W2) sont irradiés sur la surface (10) selon le même angle d'irradiation (a1), dans lequel l'équipement rayonnant (2) présente une diode luminescente en tant que première source de lumière (22), laquelle émet un rayonnement dans la première plage de longueurs d'onde (W1), ainsi qu'une diode luminescente en tant que seconde source de lumière (24), laquelle émet un rayonnement dans la deuxième plage de longueurs d'onde (W2), dans lequel les pigments à effet individuels colorés sont résolus en fonction de leur couleur par l'utilisation de plusieurs diodes luminescentes (22, 24, 26) et dans lequel le rayonnement diffusé et/ou réfléchi depuis la surface (10) est ce rayonnement qui est acheminé vers l'unité de prise d'image (4a) en tant que suite du rayonnement irradié depuis l'équipement rayonnant (2), dans lequel la première image (B1) et la deuxième image (B2) sont comparées ou compensées l'une avec l'autre,
**caractérisé en ce que**
la comparaison se rapporte à des domaines individuels de pixels de l'image, dans lequel les domaines de pixels sont définis sur un niveau des pixels ou dans l'histogramme par la formation d'une valeur-seuil mathématique et dans lequel la formation d'une valeur-seuil mathématique s'effectue de manière dynamique et la formation d'une valeur-seuil est déduite d'informations d'image tels une brillance d'image, un contraste d'image.

2. Procédé selon la revendication 1,
**caractérisé en ce que**
des images (B1, B2)ou des extraits de ces images (B1, B2) sont amenés à être couverts mathématiquement.

3. Procédé selon au moins une des revendications précédentes,
**caractérisé en ce que**
selon le premier angle d'irradiation (a1) un rayonnement avec une troisième plage de longueurs d'onde (W3), qui se différencie de la première plage de longueurs d'onde (W1) ainsi que de la deuxième plage de longueurs d'onde (W2), est irradié sur la surface (10) et l'unité de prise d'image (4a) prend le rayonnement réfléchi et/ou diffusé depuis la surface (10) et prend ainsi une troisième image à résolution spatiale (B3).

4. Dispositif d'analyse de propriétés de surface optiques de surfaces (10), dans lequel une surface (10) à analyser est une surface (10) dotée d'une couche de vernis et la couche de vernis présente des pigments à effet, avec un premier équipement rayonnant (2) lequel pointe un rayonnement sur une surface (10) à analyser selon un angle d'irradiation (a1) prédéterminé, avec un équipement de détection de rayonnement (4) lequel prend le rayonnement irradié par le premier équipement rayonnant (2) sur la surface (10) et renvoyé depuis la surface (10) selon un angle de saisie (b1), dans lequel l'équipement de détection de rayonnement (4) présente une unité de prise d'image (4a) prenant des images noir et blanc à résolution spatiale, dans lequel l'unité de prise d'image (4a) présente une pluralité d'éléments photographiques identiques, par laquelle ceux-ci sont conçus pour prendre des images noir et blanc ou à gamme de gris, dans lequel tant l'équipement rayonnant (2) que l'équipement de détection de rayonnement (4) est agencé dans un logement (60) et ce logement (60) présente essentiellement une ouverture (62) pour une émergence du rayonnement sur la surface (10), et dans lequel le rayonnement renvoyé depuis la surface (10) est le rayonnement qui est acheminé vers l'unité de prise d'image (4a) en tant que suite du rayonnement irradié depuis l'équipement rayonnant (2), dans lequel l'équipement rayonnant (2) est réalisé de telle sorte qu'il est conçu pour une émission de rayonnement au moins partiellement décalée dans le temps avec au moins deux plages de longueurs d'onde (W1, W2) différentes selon le même angle d'irradiation (a1), dans lequel l'équipement rayonnant (2) présente une diode luminescente en tant que première source de lumière (22) pour l'émission d'un rayonnement dans la première plage de longueurs d'onde (W1), ainsi qu'une autre diode luminescente en tant que seconde source de lumière (24) pour l'émission d'un rayonnement dans la deuxième plage de longueurs d'onde (W2), et l'unité de prise d'image (4a) est conçue pour la prise d'une première image (B1), laquelle correspond au rayonnement avec la première plage de longueurs d'onde (W1), et pour la prise d'une deuxième image (B2), laquelle correspond au rayonnement avec la deuxième plage de longueurs d'onde (W2), et dans lequel le dispositif est conçu pour résoudre les pigments à effet individuels colorés en fonction de leur couleur par l'utilisation de plusieurs diodes luminescentes, dans lequel le dispositif présente un équipement de comparaison (30) pour comparer la première image (B1) à la deuxième image (B2),
**caractérisé en ce que**
la comparaison se rapporte à des domaines individuels de pixels de l'image, dans lequel les domaines de pixels sont définis sur un niveau des pixels ou dans l'histogramme par la formation d'une valeur-seuil mathématique et dans lequel la formation d'une valeur-seuil mathématique s'effectue de manière dynamique et la formation d'une valeur-seuil est déduite d'informations d'image tels une brillance d'image, un contraste d'image.

5. Dispositif selon la revendication 4,
**caractérisé en ce que**
l'équipement rayonnant (2) présente un agencement de guidage de rayonnement (40), lequel fait que le rayonnement dans la première plage de longueurs d'onde (W1) et le rayonnement dans la deuxième plage de longueurs d'onde (W2) sont irradiés sur la surface (10) selon le même angle d'irradiation (α1).

6. Dispositif (1) selon la revendication 5,
**caractérisé en ce que**
l'agencement de guidage de rayonnement (40) présente au moins un élément miroir (42).

7. Dispositif (1) selon la revendication 4,
**caractérisé en ce que**
le dispositif (1) présente un équipement de processeur (50), lequel établit à partir d'une comparaison des images prises une information qui est caractéristique d'une couleur d'au moins une partie de la surface (10).
